# EUROPEAN PATENT SPECIFICATION

(11) **EP 2 489 851 B1**
(45) Date of publication and mention of the grant of the patent: **17.08.2016**
(21) Application number: 11155170.1
(22) Date of filing: 21.02.2011
(51) Int. Cl.: F02B 37/013, F02B 39/16, F02B 37/18, F02D 41/00, F02D 41/22, F02B 37/16, F02B 37/00

(54) **Method for operating a turbocharger arrangement and control unit for a turbocharger arrangement**
Verfahren zum Betrieb einer Turboladeranordnung und Steuereinheit für eine Turboladeranordnung
Procédé de fonctionnement d'un agencement de turbochargeur et unité de contrôle pour agencement de turbochargeur

(43) Date of publication of application: 22.08.2012
(73) Proprietor: Ford Global Technologies, LLC, Dearborn, MI 48126 (US)
(72) Inventor: Chevalier, Alain, 4841, Henri-Chapelle (BE); Bartsch, Arno, 6225 DG, Maastricht (NL); Petrovic, Simon, 6227TV, Maastricht (NL)
(74) Representative: Illing, Rolf

(56) References cited:
- EP-A1- 2 455 595
- WO-A1-2011/007455
- DE-A1-102008 018 133
- FR-A1- 2 937 379
- JP-A- 4 017 723
- JP-A- 4 047 125
- JP-A- 2008 297 994
- JP-A- 2010 216 402

## Description

The present invention relates to a method for operating a turbocharger arrangement of an internal combustion engine and a control unit for such a turbocharger arrangement.

Internal combustion engines, in particular diesel and gasoline engines, are frequently equipped with turbochargers. A turbocharger operates by compression of the intake airflow into the engine in order to achieve more power. In particular, a predetermined power can be generated by a turbocharged engine with a smaller displacement volume and thus smaller size and less weight, thereby achieving an increased specific power and a reduction of fuel consumption.

In general, turbochargers are driven by the exhaust flow of the internal combustion engine. To this end, a turbocharger comprises a turbine arranged in the exhaust flow of the internal combustion engine, driving a compressor for compressing the intake airflow of the engine via a connecting drive shaft.

Recently, multi-stage sequential turbocharging has become popular. A regulated two-stage turbocharging system comprises a low-pressure (LP) stage for peak power and a high-pressure (HP) stage for fulfilling the back pressure requirements for driving exhaust gas recirculation, which is needed for NOₓ pollutant emission reduction. Moreover, the HP turbine usually is smaller and more responsive than the LP turbine. The HP and LP turbines are arranged sequentially in the exhaust flow of the internal combustion engine, the LP turbine being located downstream the HP turbine. The LP and HP compressors are arranged sequentially as well, the HP compressor being located in the intake airflow downstream the LP compressor. The exhaust flow and/or the intake airflow are controlled by one or more bypass valves located in branches of the exhaust and/or intake system, which are parallel to the respective turbine and/or compressor. In particular, the exhaust flow may be controlled by a bypass valve of the HP turbine and/or a wastegate for bypassing the LP turbine. With the bypass valve closed, the respective turbine is driven maximally, while with the bypass valve partially or fully opened, the parallel branch is bypassed by at least part of the exhaust flow, the respective turbine being driven at a reduced rate. Similarly, the intake airflow may be controlled by a bypass valve of the HP compressor. The bypass valves ensure a smooth operation of the engine and also ensure respecting various further constraints, concerning for example exhaust composition, compressor outlet temperature and turbine inlet temperature, as well as avoiding turbocharger surge or overspeed.

The bypass valves may be controlled actively, for example, electrically or by vacuum, and may comprise a position feedback sensor. As the HP turbine bypass valve is critical to emissions control, it is usually actively controlled and equipped with a position feedback sensor. The wastegate is usually also actively actuated and may or may not comprise a position feedback sensor. For reduction of cost and complexity, in particular the compressor bypass valve may be passive, i.e. it opens or closes due to the pressure difference across it, having only two possible positions, which are the fully open and the fully closed positions. The amount of pressure difference required to operate the compressor bypass valve is determined by the design of the valve, for example, by the stiffness of a spring acting upon the valve. For the same reasons, the compressor bypass valve frequently is not equipped with a position feedback sensor.

The active valves usually have a default or "failsafe" position into which they move when there is no vacuum or electrical supply. The failsafe position normally is either fully open or fully closed. The default setting is determined by factors such as safety and engine power requirements at altitude. However, due to a variety of reasons, the compressor bypass valve may also fail, being stuck in the fully closed or in the fully open position, for example. It would be desirable to be able to detect such failure of the compressor bypass valve, without a position feedback sensor involving increased cost and complexity.

According to JP 2010 216402 A, in a diagnostic device, intake pressure supplied to a cylinder of an engine is detected, and if the intake pressure is out of the range of the intake pressure in the normal state, the control valves are singly sequentially operated in order to detect the valve causing the operation failure. According to WO 2011/007455 A1 and FR 2 937 379 A1, an abnormality in a supercharger is determined based on a supercharging pressure.

In JP 4 017723 A and JP 4 047125 A, methods for detection of a failure of the high-pressure turbine bypass valve are disclosed. According to DE 10 2008 018133 A1, a failure mode of a cutoff valve in an air supply or an exhaust branch of a turbo charger arrangement is detected.

It is an object of the present invention to provide a method for operating a turbocharger arrangement of an internal combustion engine that permits detecting a failure mode of the compressor bypass valve, without requiring a position feedback sensor of the valve. It is a further object of the invention to provide a control unit for a turbocharger arrangement of an internal combustion engine operating accordingly.

This object is met by a method according to claim 1 and a control unit according to claim 10.

The inventive method for operating a turbocharger arrangement of an internal combustion engine refers to a turbocharger arrangement or turbocharger system comprising a low-pressure turbocharging stage and a high-pressure turbocharging stage, which are arranged sequentially. The low-pressure turbocharging stage comprises a low-pressure turbocharger, which, in particular, comprises a low-pressure turbine driving a low-pressure compressor. The high-pressure turbocharging stage comprises a high-pressure turbocharger, comprising a high-pressure turbine driving a high-pressure compressor. The high-pressure compressor is arranged downstream the low-pressure compressor in the intake airflow of the internal combustion engine. The low-pressure turbine is located downstream the high-pressure turbine in the exhaust flow of the engine.

The high-pressure compressor exhibits a compressor bypass valve, which is not equipped with a position sensor providing a feedback signal representative of the actual position of the valve. In particular, the compressor bypass valve is passive, i.e. operated only by the pressure difference acting across it. The compressor bypass valve may be limited to only two operational states, which are the fully open and the fully closed positions.

According to the inventive method, at least one sensor signal of the turbocharger arrangement, i.e. a high pressure turbocharger speed signal, is evaluated for detecting a failure mode of the compressor bypass valve. As the compressor bypass valve does not comprise a position feedback sensor, the at least one sensor signal is provided by a sensor of the turbocharger arrangement other than a compressor bypass valve feedback sensor. Such other sensor may be required for the operation of the turbocharger arrangement, the signal of which is thus available for evaluation. The signal of the sensor is evaluated in such a manner as to provide an indication of a possible failure of the compressor bypass valve.

By evaluating a signal of a sensor of the turbocharger arrangement for detecting a failure mode of the compressor bypass valve, it is possible to detect such a failure mode without the need for a position feedback sensor of the compressor bypass valve. In this way, a diagnostic method for detecting failure of the compressor bypass valve is provided, without the additional cost and complexity which would be associated with a dedicated compressor bypass valve sensor.

According to preferred embodiments of the invention, the at least one sensor signal is a signal representative of high pressure turbocharger speed, further it may be a signal representative of intake mass airflow, boost pressure, inter-stage pressure, inter-stage temperature, post-compressor temperature and/or low pressure turbocharger speed. Such a signal may be provided by a corresponding dedicated sensor. A single, a multiplicity of, or all such sensor signals available may be evaluated for detecting a failure mode of the compressor bypass valve.

In particular, the intake mass airflow of the internal combustion engine may be measured by a sensor situated within the intake airway, for example downstream the high-pressure compressor and, in order to account for the flow through the compressor bypass valve, downstream the downstream junction of the compressor bypass branch to the main intake airway. The boost pressure, which is provided by the turbocharger arrangement and which is fed into the internal combustion engine, may be measured roughly at the same position. The inter-stage boost pressure and temperature are measured by a pressure or a temperature sensor, respectively, located in a section of the intake airway of the engine between the low-pressure and the high-pressure compressor. The post-compressor temperature is measured preferably immediately downstream the high-pressure compressor. The turbocharger speed, which may be the high-pressure turbocharger speed or the low-pressure turbocharger speed, is measured by a turbocharger speed sensor arranged at the respective turbine or compressor or drive shaft. One or more of such sensors are required for controlling the operation of the turbocharger arrangement. Therefore, one or more corresponding sensor signals are available for evaluation. The selection of sensor signal or signals employed for the evaluation, as well as the procedure of evaluation, may depend on the set of sensors actually available.

The sensor signals mentioned are sensitive to the flow through the compressor bypass valve and therefore to the actual state of the compressor bypass valve. By evaluating one or a multiplicity of the sensor signals mentioned, a possible failure of the compressor bypass valve is readily detectable.

In a preferred manner, the at least one sensor signal is evaluated for determining at least one physical parameter of the turbocharger arrangement, wherein the at least one physical parameter permits discriminating the modes of operation of the compressor bypass valve. More than one sensor signal can be evaluated for determining a physical parameter, and more than one physical parameter can be used for discriminating the modes of operation of the compressor bypass valve. As compared to the sensor signal itself, such a physical parameter may provide in increased magnitude of difference between the compressor bypass valve normal and failure modes. By employing a physical parameter indicative of a physical condition of the turbocharger arrangement instead of the sensor signal itself, a more reliable distinction between the possible modes of operation of the compressor bypass valve and a safer detection of a malfunction of the compressor bypass valve is thus achieved. Some physical parameters can be directly measured by dedicated sensors.

The at least one physical parameter of the turbocharger arrangement employed for detecting a failure mode of the compressor bypass valve may be - apart from high pressure turbocharger speed - for example, the high-pressure compressor airflow, which may be corrected for the airflow passing through the compressor bypass branch, the high-pressure or low-pressure or total compressor pressure ratio, the low-pressure turbocharger speed, the high-pressure or low-pressure or total compressor efficiency and/or the post-compressor temperature. Those parameters are sensitive to the flow through the compressor bypass branch and are thus particularly suitable for distinguishing between a normal and a failure mode of the compressor bypass valve. In this way, a particularly simple and reliable detection of a failure of the compressor bypass valve is achieved. A single one or a combination of such parameters may be employed for this purpose.

As the magnitude of the effect of the compressor bypass valve position on the at least one sensor signal and/or on the at least one physical parameter depends on an engine operating point, it is particularly preferred to account for the engine operation point in evaluating the sensor signal and/or the physical parameter for detecting a failure mode of the compressor bypass valve. Thus, for example, depending on the engine operating point, different sensor signals or physical parameters may be used to detect a failure of the compressor bypass valve. In this way, a failure of the compressor bypass valve can be safely detected under a variety of operating conditions of the engine. The engine operation point may be characterized by, for example, the engine speed and/or load. The particular manner to account for the engine operation point may also depend on a calibration of the engine and the characteristics of the components of engine and turbocharger arrangement.

Preferably, the at least one sensor signal is filtered before the evaluation for detecting a possible failure of the compressor bypass valve. Alternatively or additionally, a physical parameter or function representative of the mode of operation of the compressor bypass valve may be filtered. Such a function is derived by evaluating the at least one sensor signal and may be, for example, a parameter indicating the state of the compressor bypass valve or a parameter or error flag indicating the presence of a failure of the compressor bypass valve. In a simple case, the function may employ the values 0 or 1, according to the valve state being fully closed or fully open, respectively, or a valve failure being detected or not.

Filtering may be, in particular, time-domain low-pass filtering. Filtering may be performed on any level of evaluation, in particular one or more raw sensor signals may be filtered and/or one or more physical parameters derived from the raw sensor signals and/or an error flag representing compressor bypass valve failure. Filtering serves to avoid false detection of a failure mode due to, for example, noise or trans i-tion states when the valve changes its position from open to closed or vice versa.

According to a preferred embodiment of the present invention, the at least one sensor signal is continuously evaluated during operation of the internal combustion engine for detecting a failure mode of the compressor bypass valve, i.e. the at least on sensor signal is evaluated in real-time or in short intervals. In this way, the function of the compressor bypass valve is continuously monitored to detect a failure as early as possible.

If a failure of the compressor bypass valve occurs, this may have considerable consequences for the overall functioning of the turbocharger arrangement. For safety reasons, it is therefore particularly preferred to take an action in response to a detection of a failure mode of the compressor bypass valve.

In particular, the turbocharger arrangement may be operated in normal operation according to a first control mode. Such a control mode is represented by a sequence or algorithm for controlling actuators available within the turbocharger arrangement for managing its overall operation. When a failure mode of the compressor bypass valve is detected, the turbocharger arrangement is controlled according to a second control mode. The second control mode functions in a different way, thereby accommodating to the failure. Thus, for example, the second control mode may be such that in spite of the failure of the compressor bypass valve, a maximum in responsiveness and power and/or a minimum in pollutant emissions is achieved. In particular, the control mode may be automatically switched by a control unit after detection of the failure. A warning notice may be given to an operator, and the failure may also be stored in a failure memory of the control unit.

The first control mode, i.e. the control mode in normal operation, may be distinct according to the engine speed and/or torque:
At low engine speed and/or torque, the bypass valve of the low-pressure turbine is set to the fully closed position, and the bypass valve of the high-pressure turbine is employed for controlling the boost pressure of the turbocharger arrangement, preferably in a closed-loop control, according to an engine operation point. Due to the pressure difference acting, the compressor bypass valve is forced into the fully closed position. In this way, optimal performance in the low-speed/torque domain can be provided, as well as the back pressure required for exhaust gas recirculation.

At higher engine speed and/or torque, the bypass valve of the high-pressure turbine is set to the fully open position, and the bypass valve of the low-pressure turbine is employed for controlling the boost pressure of the turbocharger arrangement, preferably in a closed-loop control. The compressor bypass valve moves into the fully open position. In this way, peak engine power can be provided.

Alternatively, depending on the current engine and/or load and the current position of the compressor bypass valve, both of the low-pressure and the high-pressure turbine valves can be set simultaneously to optimal positions, which may both be intermediate positions between fully closed and fully opened. This means that a closed-loop control employing both of the low-pressure and the high-pressure turbine valves is performed.

According to a preferred embodiment effective in the low-speed/torque domain, control may be carried out in the normal mode by setting the bypass valve of the low-pressure turbine fully closed and controlling the boost pressure of the turbocharger arrangement by the bypass valve of the high-pressure turbine alone. However, any other low-speed/torque control mode may be applied as well. The compressor bypass valve is fully closed in this mode.

When a failure of the compressor bypass valve is detected, i.e. the compressor bypass valve is open, in particular fully open, a second control mode is employed. According to the second control mode, the high-pressure turbine bypass valve is set fully open and the boost pressure is controlled by the low-pressure turbine bypass valve. Preferably, a closed-loop control is performed in this way, but with different terms than in the normal mode. This means that, although engine speed and/or torque are low, the control mode is similar to the control mode employed in the highspeed/torque domain. In this way, a sufficient operation of the turbocharger arrangement can be maintained in spite of the failure of the compressor bypass valve.

According to a preferred embodiment effective in the high-speed/torque domain, in the normal mode the bypass valve of the high-pressure turbine is set fully open, and the boost pressure of the turbocharger arrangement is controlled by the bypass valve of the low-pressure turbine alone; however, another high-speed/torque control mode may be applied as well. In this mode the compressor bypass valve is fully open.

When a failure of the compressor bypass valve is detected, i.e. the compressor bypass valve is closed, in particular fully closed, a second control mode is employed according to which the low-pressure turbine bypass valve is fully closed and the boost pressure is controlled by the high-pressure turbine bypass valve. Preferably, the control is performed in a closed loop with different terms than in the normal mode. Although the engine speed and/or torque are high, the control mode is therefore similar to the control mode employed in the low-speed/torque domain. This guarantees a sufficient operation of the turbocharger arrangement to maintain engine performance, in spite of the failure of the compressor bypass valve.

According to a further aspect of the invention, a control unit for controlling a turbocharger arrangement of an internal combustion engine is configured to operate according to a method as described above. In particular, the control unit comprises signal input ports for capturing at least one sensor signal from the turbocharger arrangement. The control unit further comprises data processing means and output means for controlling the turbocharger arrangement by operating the actuators of the turbocharger arrangement, which are, in particular, the bypass valves of the low-pressure and the high-pressure turbines. The valves may be operated, for example, by vacuum or by electric signals. According to the invention, the processing means are configured to evaluate the at least one sensor signal for detecting a failure mode of the compressor bypass valve, as described above. The processing means may be, in particular, configured for switching automatically from a first control mode to a second control mode upon detection of a failure of the compressor bypass valve. Detection of the failure mode and the response to the failure may depend on further parameters, such as engine load and/or speed. The control unit may also comprise a signal output for a warning signal and a failure memory for storing information on the failure mode detected. The control unit may be part of an electronic control unit of the engine.

Further aspects of the present invention will be apparent from the Figures and from the description of a preferred embodiment that follows.
- Fig. 1: shows a simplified block diagram of an internal combustion engine with a turbocharger arrangement;
- Fig. 2: shows a graphical representation of the dependence of turbocharger speed on the position of the compressor bypass valve in an exemplary case.

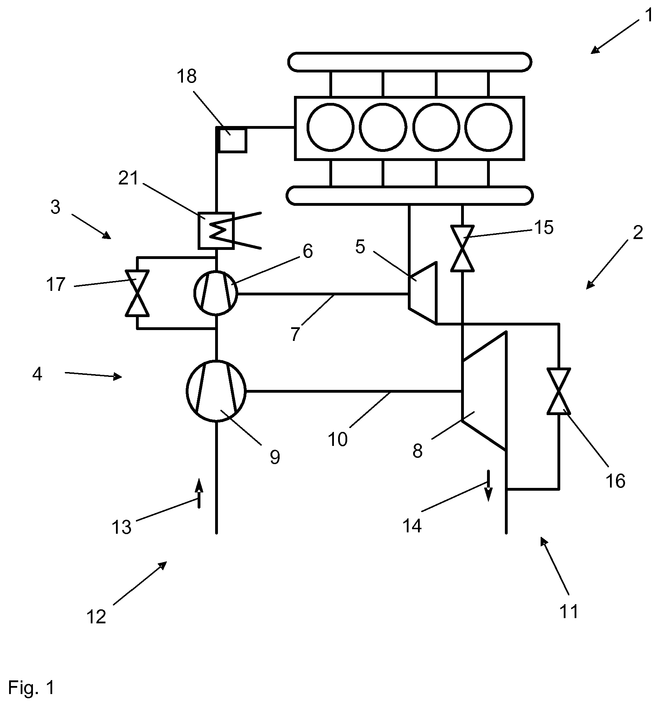

In the embodiment shown schematically in Fig. 1, an internal combustion engine 1 exhibits a turbocharger arrangement 2 or turbocharger system comprising a high-pressure turbocharger 3 and a low-pressure turbocharger 4. The high-pressure turbocharger 3 comprises a high-pressure turbine 5 and a high-pressure compressor 6, the compressor 6 being driven by the turbine 5 via a drive shaft 7. The low-pressure turbocharger 4 comprises a low-pressure turbine 8 driving a low-pressure compressor 9 by means of a drive shaft 10. The turbines 5, 8 are arranged sequentially in the exhaust system 11 of the internal combustion engine, the high-pressure turbine 5 being arranged upstream the low-pressure turbine 8, i.e. in a section with higher pressure. Correspondingly, the compressors 6, 9 are arranged sequentially in the intake system 12 of the engine 1, the high-pressure compressor 6 being located downstream the low-pressure compressor 9. The direction of airflow in the intake system 12 and the direction of exhaust flow in the exhaust system 11 are indicated by the arrows 13, 14, respectively. An intercooler 21 is included post the HP compressor. Generally, the high-pressure turbine 5 and the high-pressure compressor 6 are smaller than the low-pressure turbine 8 and the low-pressure compressor 9, respectively. This is indicated symbolically in Fig. 1.

A high-pressure turbine bypass valve 15 (TBV) is arranged in a parallel branch of the exhaust system parallel to the high-pressure turbine 5. Therefore, a full or partial opening of the high-pressure turbine bypass valve 15 creates a bypass for the exhaust flow to partially or completely bypass the high-pressure turbine 5. If the exhaust flow partially or completely passes through the bypass valve 15, the high-pressure turbine 5 is consequently driven at a reduced rate. The operation of the high-pressure turbocharger 3 can thus be controlled by the operation of the TBV 15. For this purpose, the TBV 15 is actively controlled, serving as an actuator in the turbocharger arrangement 2, and may be equipped with a position feedback sensor (not shown). In a similar manner, a low-pressure turbine bypass valve 16 is arranged in a parallel branch of the exhaust system 11 parallel to the low-pressure turbine 8. The low-pressure turbine bypass valve 16 is also denoted "wastegate" (WG). The WG 16 is actively operated, serving as an actuator, and may or may not comprise a position feedback sensor.

In the intake system 12, the intake air flows through the low-pressure compressor 9, being compressed in a first stage of compression. Thereafter, the intake air flows through the high-pressure compressor 6 representing a second stage of compression, or through a parallel branch arranged parallel to the high-pressure compressor 6. The parallel branch can be opened or closed by a compressor bypass valve 17 (CBV). The CBV 17 is passive, i.e. operated by the pressure difference acting across it, and does not comprise a position feedback sensor. In particular, the CBV 17 has only two positions, which are fully open and fully closed.

The intake air mass flow, the boost pressure, and/or the compressor outlet temperature may be measured by a sensor 18 symbolically indicated in Fig. 1. The engine 1 may be also equipped with an exhaust gas recirculation, which is not shown in Fig. 1.

The state of the compressor bypass valve 17 has a direct or indirect influence on a variety of parameters governing the operation of the turbocharger arrangement 2. Thus, for example, the pressure ratio provided by the high-pressure compressor 6 and the mass flow through the intake system 12 are considerably altered due to opening or closing the CBV 17. As well, the speed of the high-pressure turbocharger 3, the boost pressure provided by the turbocharger arrangement 2, and a number of further parameters are influenced by the function of the CBV 17. Consequently, such parameters can be employed for detecting a failure of the CBV 17.

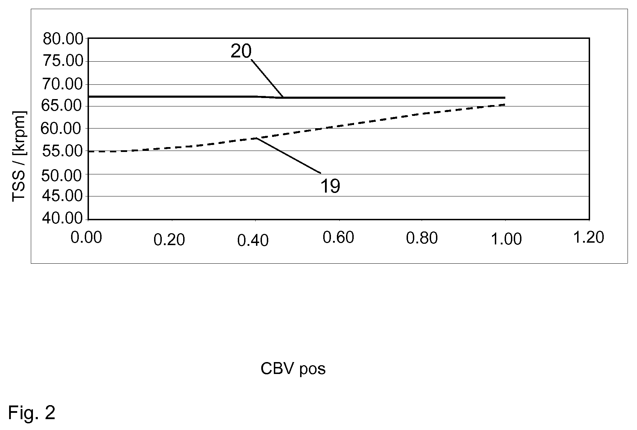

As an example, Fig. 2 shows the turbocharger speed (in 1000 rotations per minute) for the high-pressure turbocharger (curve 19) and for the low-pressure turbocharger (curve 20). Both curves are drawn depending on the position of the compressor bypass valve 17, CBV_pos, which is given as a fraction of full opening. As can be seen in Fig. 2, the speed 19 of the high-pressure turbocharger 3 significantly rises with the degree of opening of the CBV 17, while the speed 20 of the low-pressure turbocharger 4 is largely independent of the CBV opening. Conversely, the speed 19 of the high-pressure turbocharger 3 permits detecting the opening of the CBV 17. Although the compressor bypass valve 17 usually has only two positions, Fig. 2 demonstrates that intermediate positions can also be determined, in principle. Thus, if the CBV 17 is stuck in the fully open or in the fully closed position, or even in an intermediate position, this can be detected by measuring the rotational speed of the high-pressure turbocharger 3. In particular, a threshold can be set, the rotational speed exceeding the threshold indicating the CBV 17 being fully open, and the rotational speed being below the threshold indicating the CBV 17 being fully closed. In the example shown in Fig. 2 and for the set of parameters employed in that case, the threshold for distinguishing the fully closed and the fully open states of the compressor bypass valve might be set at about 60 000 rpm. The rotational speed of the high-pressure turbocharger 3 can be measured by a sensor placed at the high-pressure turbine 5, the high-pressure compressor 6, or the drive shaft 7. Additionally or alternatively the turbocharger speed can be measured by using the corresponding compressor map, if a sensor might not be available.

Fig. 2 shows measurements made at a relatively low engine speed (2000 rpm). At that engine speed, the rotational speed of the high-pressure turbocharger 3 may allow a most reliable detection of a CBV failure. For a given compressor pressure ratio, the total mass air flow also allows determination of the CBV position as well. There may also be a small drop in the boost pressure due to an opening of the CBV 17. Other parameters, such as compressor efficiency, compressor outlet temperature, or compressor pressure ratio, are less sensitive to the CBV state.

At higher engine speed, however, the rotational rate of the high-pressure turbocharger 3 may be less suitable for determining the opening of the compressor bypass valve 17. Instead, at an engine speed of 3500 rpm, the mass air flow may be most sensitive to the CBV opening, while the dependency of the turbocharger speeds on the degree of opening of the CBV 17 is small. Thus, depending on the engine operation point, and possibly on further parameters, the detection of a failure mode of the compressor bypass valve 17 may rely on different sensor signals or parameters of the turbocharger arrangement 2. Moreover, the respective threshold set for distinguishing the different states of the CBV 17 may depend on a variety of parameters.

In normal operation, i.e. with the compressor bypass 17 valve being fully functional, the turbocharger arrangement 2 may be operated depending on the engine speed and/or engine load. In the low-speed/load domain, for example at 2000 rpm and about 6 or 11 bar BMEP, the low-pressure turbine bypass valve 16 is fully closed. Accordingly, the low-pressure turbine 8 is in operation, driving the low-pressure compressor 9 to exert a first-stage compression on the intake air. The high-pressure turbine bypass valve 15 is actuated to a position depending on the power and other requirements to control the rotational speed of the high-pressure turbine 5 driving the high-pressure compressor 6 exerting a second-stage compression on the intake air. The compressor bypass valve 17 is fully closed, due to the pressure difference acting across it, corresponding to the second-stage compression of the intake air. The overall boost pressure generated by the turbocharger arrangement 2 is thus controlled by the position of the TBV 15.

In the high-speed/load domain, for example at 2750 rpm and about 6 bar BMEP or at 3500 rpm and about 17 bar BMEP, a different mode of control is employed: In this case, the TBV 15 is fully open, reducing the effect of the high-pressure turbocharger 3 to a minimum. Due to the minimal pressure difference in the second-stage compression, the compressor bypass valve 17 is fully open. The low-pressure turbine bypass valve 16 is actuated to a position for controlling the rotational speed of the low-pressure turbocharger 4. Thus, the overall boost pressure of the turbocharger arrangement 2 is controlled by the WG 16 in this case. The control of the valves is effected by an electronic control unit, the valves being actuated via electric or vacuum transmission (not shown).

If the compressor bypass valve 17 fails, this has severe effects on the operation of the turbocharger arrangement 2 as a whole. In particular, if in the low-speed/torque domain, the CBV 17 is stuck in the fully open position, boost pressure will be no longer controllable and largely lost, the second-stage compression being substantially ineffective. Such a failure mode can be detected, depending on a variety of parameters, by evaluation of the speed sensor signal of the high-pressure turbocharger 3 or by evaluation of the signal of a mass air flow sensor in the intake system, for example. If such a failure mode is detected, control is automatically switched by the control unit to another control mode. In this control mode, the TBV 15 is fully open and the WG 16 is actuated for controlling the speed of the low-pressure turbocharger 4 or the intake manifold boost pressure to the requirements. Thus, in case of failure of the CBV 17 at low engine speed and/or torque, the turbocharger arrangement 2 is controlled in a similar manner as in normal operation at high engine speed and/or torque. In this way, in spite of the failure of the CBV 17, the boost pressure remains controllable to a large extent.

If, on the other hand, in the high-speed/torque domain the compressor bypass valve 17 is stuck in the fully closed position, overall boost pressure will also be largely lost, and the intake air flow will be choked. Such a failure mode can be detected as described above, for example by evaluation of a mass air flow sensor signal. If such a failure is detected, the control mode is automatically switched by the control unit. In the control mode employed after detection of the CBV failure, the wastegate 16 is fully closed and the low-pressure turbine bypass valve 15 is actuated for controlling the speed of the high-pressure turbocharger 3 or the intake manifold boost pressure. Thus, if the CBV 17 fails at high engine speed and/or torque, the turbocharger arrangement 2 is controlled in a similar manner as in normal operation at low engine speed and/or torque. In spite of the failure of the CBV 17, the boost pressure thus remains controllable and further requirements can be fulfilled to a large extent.

### List of Reference numerals:

- 1: Internal combustion engine
- 2: Turbocharger arrangement
- 3: High-pressure turbocharger
- 4: Low-pressure turbocharger
- 5: High-pressure turbine
- 6: High-pressure compressor
- 7: Drive shaft
- 8: Low-pressure turbine
- 9: Low-pressure compressor
- 10: Drive shaft
- 11: Exhaust system
- 12: Intake system
- 13: Fresh air flow
- 14: Exhaust gas flow
- 15: High-pressure turbine bypass valve
- 16: Low-pressure turbine bypass valve
- 17: Compressor bypass valve
- 18: Sensor
- 19: High-pressure turbocharger speed
- 20: Low-pressure turbocharger speed
- 21: Intercooler

## Claims

1. Method for operating a turbocharger arrangement (2) of an internal combustion engine (1), the turbocharger arrangement (2) comprising a low-pressure and a high-pressure turbocharging stage arranged sequentially, the high-pressure turbocharging stage comprising a high-pressure compressor (6) with a sensorless compressor bypass valve (17), the method comprising evaluating at least one sensor signal of the turbocharger arrangement (2) for detecting a failure mode of the compressor bypass valve (17),
**characterized in that**
the at least one sensor signal is a high pressure turbocharger speed signal.

2. Method according to claim 1,
**characterized in that**
the at least one sensor signal is evaluated for determining at least one physical parameter of the turbocharger arrangement (2), the at least one physical parameter being discriminative with respect to the mode of operation of the compressor bypass valve (17).

3. Method according to claim 2,
**characterized in that**
the at least one physical parameter of the turbocharger arrangement (2) is turbocharger speed and further may be compressor airflow, compressor pressure ratio, compressor efficiency and/or compressor outlet temperature.

4. Method according to any one of the preceding claims,
**characterized in that**
the at least one sensor signal of the turbocharger arrangement (2) is evaluated for detecting a failure mode of the compressor bypass valve (17) depending on an engine operating point.

5. Method according to any one of the preceding claims,
**characterized in that**
the at least one sensor signal and/or the at least one physical parameter of the turbocharger arrangement (2) and/or a function representative of the mode of operation of the compressor bypass valve (17) is filtered.

6. Method according to any one of the preceding claims,
**characterized in that**
the at least one sensor signal is continuously evaluated during operation of the internal combustion engine (1) for detecting a failure mode of the compressor bypass valve (17).

7. Method according to any one of the preceding claims,
**characterized in that**
the turbocharger arrangement (2) is operated according to a first control mode and that upon detection of a failure mode of the compressor bypass valve (17), the turbocharger arrangement (2) is operated according to a second control mode.

8. Method according to claim 7,
**characterized in that**
the first control mode is a low-speed/torque control mode and that in the second control mode the high-pressure turbine bypass valve (15) is set fully open and a boost pressure is controlled by the low-pressure turbine bypass valve (16).

9. Method according to claims 7 or 8,
**characterized in that**
the first control mode is a high-speed/torque control mode and that in the second control mode the low-pressure turbine bypass valve (16) is set fully closed and a boost pressure is controlled by the high-pressure turbine bypass valve (15).

10. Control unit for a turbocharger arrangement (2) of an internal combustion engine (1),
**characterized in that**
the control unit is configured for controlling the turbocharger arrangement (2) according to a method according to any one of the preceding claims.

## Patentansprüche

1. Verfahren zum Betreiben einer Turboladeranordnung (2) einer Brennkraftmaschine (1), wobei die Turboladeranordnung (2) eine Niederdruck- und eine Hochdruckturboladungsstufe, die nacheinander angeordnet sind, umfasst, wobei die Hochdruckturboladungsstufe einen Hochdruckverdichter (6) mit einem sensorlosen Verdichterumgehungsventil (17) umfasst, wobei das Verfahren ein Auswerten mindestens eines Sensorsignals der Turboladeranordnung (2) umfasst, um eine Ausfallart des Verdichterumgehungsventils (17) zu detektieren,
**dadurch gekennzeichnet, dass**:
mindestens ein Sensorsignal ein Drehzahlsignal eines Hochdruckturboladers ist.

2. Verfahren nach Anspruch 1,
**dadurch gekennzeichnet, dass**:
das mindestens eine Sensorsignal ausgewertet wird, um mindestens einen physikalischen Parameter der Turboladeranordnung (2) zu bestimmen, wobei der mindestens eine physikalische Parameter in Bezug auf die Betriebsart des Verdichterumgehungsventils (17) unterschiedlich ist.

3. Verfahren nach Anspruch 2,
**dadurch gekennzeichnet, dass**:
der mindestens eine physikalische Parameter der Turboladeranordnung (2) eine Turboladerdrehzahl ist und weiterhin ein Verdichterluftstrom, ein Verdichterdruckverhältnis ein Verdichterwirkungsgrad und/oder eine Verdichterauslasstemperatur sein kann.

4. Verfahren nach einem der vorhergehenden Ansprüche,
**dadurch gekennzeichnet, dass**:
das mindestens eine Sensorsignal der Turboladeranordnung (2) ausgewertet wird, um eine Ausfallart des Verdichterumgehungsventils (17) in Abhängigkeit von einem Maschinenbetriebspunkt zu detektieren.

5. Verfahren nach einem der vorhergehenden Ansprüche,
**dadurch gekennzeichnet, dass**:
das mindestens eine Sensorsignal und/oder der mindestens eine physikalische Parameter der Turboladeranordnung (2) und/oder eine Funktion, die kennzeichnend für die Betriebsart des Verdichterumgehungsventils (17) ist, gefiltert wird.

6. Verfahren nach einem der vorhergehenden Ansprüche,
**dadurch gekennzeichnet, dass**:
das mindestens eine Sensorsignal während des Betriebs der Brennkraftmaschine (1) kontinuierlich ausgewertet wird, um eine Ausfallart des Verdichterumgehungsventils (17) zu detektieren.

7. Verfahren nach einem der vorhergehenden Ansprüche,
**dadurch gekennzeichnet, dass**:
die Turboladeranordnung (2) entsprechend einer ersten Steuerungsart betrieben wird und dass bei Detektion einer Ausfallart des Verdichterumgehungsventils (17) die Turboladeranordnung (2) entsprechend einer zweiten Steuerungsart betrieben wird.

8. Verfahren nach Anspruch 7,
**dadurch gekennzeichnet, dass**:
die erste Steuerungsart eine Steuerungsart einer niedrigen Drehzahl/eines niedrigen Drehmoments ist und dass in der zweiten Steuerungsart das Hochdruckturbinenumgehungsventil (15) auf eine vollständige Öffnung eingestellt wird und ein Ladedruck von dem Niederdruckturbinenumgehungsventil (16) gesteuert wird.

9. Verfahren nach einem der Ansprüche 7 oder 8,
**dadurch gekennzeichnet, dass**:
die erste Steuerungsart eine Steuerungsart einer hohen Drehzahl/eines hohen Drehmoments ist und dass in der zweiten Steuerungsart das Niederdruckturbinenumgehungsventil (16) auf eine vollständige Schließung eingestellt wird und ein Ladedruck von dem Hochdruckturbinenumgehungsventil (15) gesteuert wird.

10. Steuereinheit für eine Turboladeranordnung (2) einer Brennkraftmaschine (1),
**dadurch gekennzeichnet, dass**:
die Steuereinheit konfiguriert ist, die Turboladeranordnung (2) gemäß einem Verfahren nach einem der vorhergehenden Ansprüche zu steuern.

## Revendications

1. Procédé pour faire fonctionner un agencement turbocompresseur (2) d'un moteur à combustion interne (1), l'agencement turbocompresseur (2) comprenant un étage turbocompresseur basse pression et un étage turbocompresseur haute pression agencés l'un à la suite de l'autre, l'étage turbocompresseur haute pression comprenant un compresseur haute pression (6) équipé d'une soupape de dérivation de compresseur sans capteur (17), le procédé consistant à évaluer au moins un signal de capteur de l'agencement turbocompresseur (2) en vue de détecter un mode de défaillance de la soupape de dérivation de compresseur (17),
**caractérisé en ce que**
ledit au moins un signal de capteur est un signal de vitesse de turbocompresseur haute pression.

2. Procédé selon la revendication 1,
**caractérisé en ce que**
ledit au moins un signal de capteur est évalué en vue de déterminer au moins un paramètre physique de l'agencement turbocompresseur (2), ledit au moins un paramètre physique étant discriminateur vis-à-vis du mode de fonctionnement de la soupape de dérivation de compresseur (17).

3. Procédé selon la revendication 2,
**caractérisé en ce que**
ledit au moins un paramètre physique de l'agencement turbocompresseur (2) est une vitesse de turbocompresseur et peut être en outre un débit d'air de compresseur, un taux de compression de compresseur, un rendement de compresseur et/ou une température de sortie de compresseur.

4. Procédé selon l'une quelconque des revendications précédentes,
**caractérisé en ce que**
ledit au moins un signal de capteur de l'agencement turbocompresseur (2) est évalué en vue de détecter un mode de défaillance de la soupape de dérivation de compresseur (17) en fonction d'un point de fonctionnement du moteur.

5. Procédé selon l'une quelconque des revendications précédentes,
**caractérisé en ce que**
ledit au moins un signal de capteur et/ou ledit au moins un paramètre physique de l'agencement turbocompresseur (2) et/ou une fonction représentative du mode de fonctionnement de la soupape de dérivation de compresseur (17) sont/est filtrés/filtré.

6. Procédé selon l'une quelconque des revendications précédentes,
**caractérisé en ce que**
ledit au moins un signal de capteur est évalué de façon continue au cours du fonctionnement du moteur à combustion interne (1) en vue de détecter un mode de défaillance de la soupape de dérivation de compresseur (17).

7. Procédé selon l'une quelconque des revendications précédentes,
**caractérisé en ce que**
l'on fait fonctionner l'agencement turbocompresseur (2) selon un premier mode de commande et, en cas de détection d'un mode de défaillance de la soupape de dérivation de compresseur (17), l'on fait fonctionner l'agencement turbocompresseur (2) selon un deuxième mode de commande.

8. Procédé selon la revendication 7,
**caractérisé en ce que**
le premier mode de commande est un mode de commande à faibles vitesse/couple et, dans le deuxième mode de commande, la soupape de dérivation de turbine haute pression (15) est réglée sur une position complètement ouverte et une pression de suralimentation est régulée par la soupape de dérivation de turbine basse pression (16).

9. Procédé selon les revendications 7 ou 8,
**caractérisé en ce que**
le premier mode de commande est un mode de commande à vitesse/couple élevés et, dans le deuxième mode de commande, la soupape de dérivation de turbine basse pression (16) est réglée sur une position complètement fermée et une pression de suralimentation est régulée par la soupape de dérivation de turbine haute pression (15).

10. Unité de commande pour un agencement turbocompresseur (2) d'un moteur à combustion interne (1),
**caractérisée en ce que**
elle est conçue pour commander l'agencement turbocompresseur (2) selon un procédé selon l'une quelconque des revendications précédentes.
